# EUROPÄISCHE PATENTSCHRIFT

(11) **EP 2 892 788 B1**
(45) Veröffentlichungstag und Bekanntmachung des Hinweises auf die Patenterteilung: **11.11.2020**
(21) Anmeldenummer: 13753873.2
(22) Anmeldetag: 02.09.2013
(51) Int. Cl.: B61L 25/02, B61L 15/00, B61C 17/00, G01P 13/00

(54) **STILLSTANDSERMITTLUNG BEI EINEM SCHIENENFAHRZEUG**
STANDSTILL DETERMINATION IN A RAIL VEHICLE
DÉTERMINATION DE L'ARRÊT D'UN VÉHICULE FERROVIAIRE

(30) Priorität: 03.09.2012 DE 102012108171
(43) Veröffentlichungstag der Anmeldung: 15.07.2015
(73) Patentinhaber: KNORR-BREMSE Systeme für Schienenfahrzeuge GmbH, 80809 München (DE)
(72) Erfinder: VOLLMER, Achim, 82024 Taufkirchen (DE)
(86) Internationale Anmeldenummer: PCT/EP2013/068053
(87) Internationale Veröffentlichungsnummer: WO 2014/033290

(56) Entgegenhaltungen:
- EP-A1- 1 473 210
- WO-A1-2009/150086
- DE-A1-102010 061 878

## Beschreibung

Die vorliegende Erfindung betrifft eine Steueranordnung für ein Schienenfahrzeug, welche es vermag, einen Stillstand des Schienenfahrzeugs zu bestimmen. Die Erfindung betrifft außerdem ein Schienenfahrzeug mit einer solchen Steueranordnung und ein entsprechendes Verfahren.

Bei Schienenfahrzeugen sind verschiedene Funktionen davon abhängig, ob sich ein Fahrzeug im Stillstand befindet oder nicht. Beispielsweise wird eine Türöffnungsfunktion in der Regel nur dann freigeschaltet, wenn ein Stillstand vorliegt. Das Bestimmen des Stillstandes wird häufig wagenweise oder lokal in Abhängigkeit von Signalen durchgeführt, die durch auf dem Wagen befindliche Sensoren bereitgestellt werden. Solche Sensoren können beispielsweise Achsgeschwindigkeitssensoren einer Gleitschutzeinrichtung sein. Fallen Sensoren aus, kann die Stillstandsbestimmung erschwert werden oder gar nicht mehr durchgeführt werden.

Die WO 2009/150086 A1 beschreibt eine Einrichtung und ein zugehöriges Verfahren, bei dem ein eine Position repräsentierendes Bildsignal zum Erzeugen eines Ortungssignals verwendet wird. Eine zeitliche Änderung des Bildsignals kann zusätzlich zur Stillstandserkennung herangezogen werden.

Eine Aufgabe der vorliegenden Erfindung besteht darin, mit geringem Aufwand eine zuverlässige Stillstandsbestimmung zu ermöglichen.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Die vorliegende Erfindung betrifft eine Steueranordnung für ein Schienenfahrzeug, mit mindestens einer Steuereinrichtung, welche zum Empfang von Sensorsignalen angeschlossen oder anschließbar ist, wobei die Sensorsignale jeweils mindestens eine Geschwindigkeit repräsentieren, sowie mit mindestens einem Busanschluss, über welchen die Steuereinrichtung zum Datenaustausch an einen Datenbus des Schienenfahrzeugs angeschlossen oder anschließbar ist. Die Steuereinrichtung ist dazu ausgebildet, basierend auf den Sensorsignalen ein Stillstandssignal zu erstellen und auf den Datenbus zu übertragen. Ferner umfasst die Steueranordnung eine Stillstandsermittlungseinrichtung, welche es vermag, über den Datenbus Stillstandssignale zu empfangen, und welche dazu ausgebildet ist, basierend auf über den Datenbus empfangenen Stillstandssignalen zu bestimmen, ob das Schienenfahrzeug sich im Stillstand befindet. Somit können über einen Datenbus, der mehrere Wagen miteinander verbinden kann, Stillstandssignale bereitgestellt werden, die lokal von einer Stillstandsermittlungseinrichtung ausgewertet können. Eine lokale Stillstandsbestimmung kann daher basierend auf einer Vielzahl von Sensorsignalen erfolgen. Selbst wenn auf einem Wagen ein oder mehrere Sensoren ausfallen, kann somit eine zuverlässige Stillstandsbestimmung durchgeführt werden. Die Sensorsignale können von geeigneten Sensoren bereitgestellt sein, welche als Teile der Steueranordnung oder separat davon ausgebildet sein können. Die Sensoren können beispielsweise Achsgeschwindigkeitssensoren oder Drehzahlsensoren einer Gleitschutzeinrichtung umfassen. Ein Sensor kann auch ein radarbasierter oder ein optischer Sensor sein, welcher eine Geschwindigkeitsmessung erlaubt. Ein Sensor kann allgemein dazu ausgebildet sein, eine Größe zu messen, welche eine Geschwindigkeit repräsentiert, insbesondere eine Fahrzeuggeschwindigkeit und/oder eine Wagengeschwindigkeit. Eine Größe kann allgemein als eine Geschwindigkeit repräsentierend angesehen werden, wenn sich aus ihr eine Geschwindigkeit ermitteln und/oder berechnen lässt, gegebenenfalls unter Verwendung zusätzlicher Parameter wie etwa einem Raddurchmesser. Ein Sensorsignal, welches eine derartige Größe angibt, kann als ein eine Geschwindigkeit repräsentierendes Signal angesehen werden. Eine Steuereinrichtung kann jeweils mit mehreren Sensoren verbunden oder verbindbar sein. Es ist vorstellbar, dass die Sensoren dazu ausgebildet sind, unabhängig voneinander eine Geschwindigkeit zu bestimmen. Etwa können mehreren unterschiedlichen Achsen zugeordnete Achsgeschwindigkeitssensoren vorgesehen sein, die unabhängig voneinander die Geschwindigkeit jeweils einer Achse zu bestimmen vermögen. Es versteht sich, dass grundsätzlich während eines normalen Betriebszustands eines Schienenfahrzeugs, wenn beispielsweise kein Gleitzustand bei einer Bremsung vorliegt, aus einer Achsgeschwindigkeit eine Fahrzeuggeschwindigkeit ermittelbar ist. Jeder elektronischen Steuereinrichtung kann mindestens ein Busanschluss zugeordnet sein. Es ist vorstellbar, dass für jeden mehrerer Wagen eine elektronische Steuereinrichtung vorgesehen ist, die an den Datenbus angeschlossen oder anschließbar sein kann. Ein Datenbus kann ein segmentweiter oder fahrzeugweit vorgesehener Datenbus sein, etwa ein Multifunction Vehicle Bus (MVB). Die Stillstandsermittlungseinrichtung und die elektronische Steuereinrichtung können innerhalb einer gemeinsamen Einrichtung, etwa einem Computer und/oder Mikrocontroller implementiert sein. Die elektronische Steuereinrichtung kann über geeigneten Programmcode und Schnittstellen verfügen, um die entsprechenden Signal zu empfangen, zu verarbeiten und zu übermitteln. Die Steuereinrichtung kann insbesondere im Rahmen einer Bremssteuereinrichtung eines Wagens implementiert sein.

Die Steuereinrichtung kann dazu ausgebildet sein, Sensorsignale von mehreren Sensoren zu empfangen und ein Stillstandssignal zu erstellen, welches für mehrere durch die Sensorsignale repräsentierte Geschwindigkeiten jeweils mindestens eine Stillstandsinformation enthält. Eine Stillstandsinformation kann insbesondere eine Datenbreite von einem Bit aufweisen. Somit kann eine vorhandene Datenbreite des Busses effizient genutzt werden.

Es kann vorgesehen sein, dass die Steuereinrichtung dazu ausgebildet ist, eine Gültigkeit für jedes empfangene Sensorsignal zu überprüfen. Die Überprüfung kann beispielsweise eine Plausibilitätsüberprüfung sein. Die Steuereinrichtung kann dazu ausgebildet sein, zu überprüfen, ob die durch das Sensorsignal beschrieben Größe und/oder ihr zeitliches Verhalten sich innerhalb vorgegebener Parameterbereiche befindet. Es kann auch vorgesehen sein, dass die Steuereinrichtung dazu ausgebildet ist, ein entsprechendes Gültigkeitssignal zu empfangen.

Weiterhin kann die Steuereinrichtung dazu ausgebildet sein, ein Stillstandssignal zu erzeugen, welches für jede Stillstandsinformation deren Gültigkeit anzeigt. Die Gültigkeit kann durch ein jeweiliges Gültigkeitssignal angezeigt sein, welches eine Datenbreite von einem Bit aufweisen kann.

Die Stillstandsermittlungseinrichtung kann dazu ausgebildet sein, ein Referenzgeschwindigkeitssignal zu empfangen. Das Referenzgeschwindigkeitssignal kann eine Referenzgeschwindigkeit angeben. Es ist vorstellbar, dass das Referenzgeschwindigkeitssignal von einer externen Einrichtung des Fahrzeugs bereitgestellt ist, etwa durch einen zentralen Rechner, eine Bremssteuereinrichtung oder eine Gleitschutzeinrichtung. Es kann vorgesehen sein, dass die Stillstandsermittlungseinrichtung dazu ausgebildet ist, ein die Gültigkeit des Referenzgeschwindigkeitssignals angebendes Signal zu empfangen oder zu erzeugen. Die Stillstandsermittlungseinrichtung kann dazu ausgebildet sein, eine Plausibilitätsüberprüfung oder eine Überprüfung des Signals oder des zeitlichen Verhaltens des Signals auf seine Zulässigkeit durchzuführen, etwa, ob die repräsentierte Größe oder die zeitliche Abhängigkeit oder Ableitung innerhalb eines vorbestimmten Parameterbereichs liegen.

Insbesondere kann die Stillstandsermittlungseinrichtung dazu ausgebildet sein, basierend auf dem Referenzgeschwindigkeitssignal zu bestimmen, ob das Schienenfahrzeug sich im Stillstand befindet. Somit kann eine Redundanzebene bereitgestellt sein. Es kann beispielsweise vorgesehen sein, dass die Stillstandsermittlungseinrichtung dazu ausgebildet ist, nur dann zu bestimmen, dass ein Stillstand vorliegt, wenn die Referenzgeschwindigkeit unterhalb einer vorbestimmten Grenzgeschwindigkeit liegt.

Die Steueranordnung kann dazu ausgebildet sein, wagenweise das Vorliegen eines Stillstands des Fahrzeugs zu bestimmen. Insbesondere kann eine Steuereinrichtung auf jedem mehrerer Wagen vorgesehen sein, die zur Bestimmung eines Stillstandes jeweils die über den Datenbus von anderen Wagen und/oder deren Steuereinrichtungen bereitgestellte Stillstandssignale berücksichtigt.

Die Erfindung betrifft außerdem ein Schienenfahrzeug mit einer hierin beschriebenen Steueranordnung.

Das Schienenfahrzeug kann mehrere Wagen mit jeweils einer elektronischen Steuereinrichtung aufweisen, welche über einen Datenbus miteinander verbunden oder verbindbar sind.

Außerdem betrifft die Erfindung ein Verfahren zum Bestimmen, ob sich ein Schienenfahrzeug im Stillstand befindet, insbesondere ein hierin beschriebenes Schienenfahrzeug. Das Verfahren umfasst die Schritte des Erstellens, durch mindestens eine elektronische Steuereinrichtung, jeweils eines Stillstandssignals basierend auf Sensorsignalen, welche jeweils mindestens eine Geschwindigkeit repräsentieren, und des Übertragens, durch die mindestens eine elektronische Steuereinrichtung, des jeweiligen Stillstandssignals auf einen Datenbus, sowie des Bestimmens, durch eine Stillstandsermittlungseinrichtung, ob ein Fahrzeugstillstand vorliegt, basierend auf über den Datenbus empfangenen Stillstandssignalen.

Die Erfindung wird nun mit Bezug auf die begleitende Zeichnung anhand bevorzugter Ausführungsformen beispielhaft erläutert.

Es zeigt:

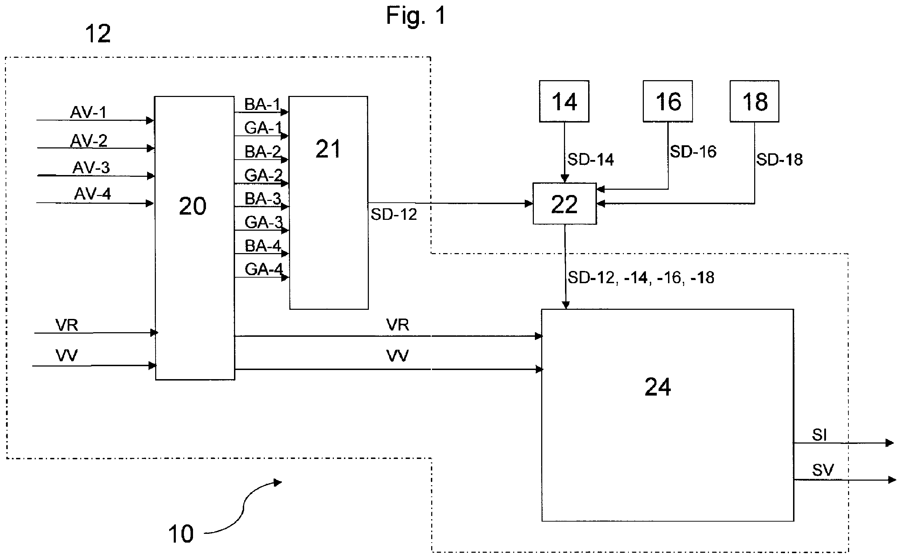

- Figur 1: schematisch ein Beispiel für eine Steueranordnung, welche dazu ausgebildet ist, ein Stillstandssignal bereitzustellen.

Figur 1 zeigt ein Beispiel für eine Steueranordnung 10 zum Bereitstellen eines Stillstandsignals. Die Steueranordnung 10 ist in diesem Beispiel auf einem Segment eines Schienenfahrzeugs implementiert, welches vier Wagen 12, 14, 16 und 18 umfasst. Es versteht sich, dass die Steueranordnung 10 bei anders organisierten Fahrzeugsegmenten oder fahrzeugweit implementiert sein kann. Auf jedem der Wagen 12, 14, 16, 18 ist eine elektronische Steuereinrichtung 20 vorgesehen. Die Steuereinrichtungen 20 sind jeweils über einen Busanschluss an einen Datenbus 22 angeschlossen, der beispielsweise ein Multifunction Vehicle Bus (MVB) sein kann. Der Datenbus 22 kann fahrzeugweit oder segmentweit ausgebildet sein. In diesem Beispiel wird davon ausgegangen, dass jeder der Wagen 12, 14, 16, 18 zwei Drehgestelle mit jeweils zwei Radachsen aufweist. Jeder Radachse ist ein Geschwindigkeitssensor zugeordnet, welcher es vermag, die Radachse zu überwachen, insbesondere die Rotation der Radachse. Es ist vorstellbar, dass nicht jeder Radachse ein Sensor zugeordnet ist. Ein Sensor ist dazu ausgebildet, ein Sensorsignal bereitzustellen, welches eine Achsgeschwindigkeit repräsentiert. Ein solches Signal kann beispielsweise eine Rotationsfrequenz oder eine aus der Überwachung der Achsrotation ermittelte Geschwindigkeit angeben. Als geeignete Sensoren kommen beispielsweise Radachsenüberwachungssensoren einer Gleitschutzeinrichtung in Frage, die etwa eine Drehzahl einer Achse oder eines Rades überwachen. Es ist allerdings auch vorstellbar, dass die Sensoren alternativ oder zusätzlich auf andere Art ein eine Geschwindigkeit repräsentierendes Signal erzeugen, etwa über Radarmessung, GPS oder optisch. Jeder Sensor ist dazu ausgebildet, an eine erste elektronische Steuereinrichtung 20 ein Sensorsignal AV-N zu übermitteln, welches die ermittelte Achsgeschwindigkeit repräsentiert. N steht dabei jeweils für eine Nummerkennzeichnung des Sensors oder der durch ihn überwachten Radachse. In diesem Beispiel läuft N für jeden Wagen von 1 bis 4. Entsprechend bezeichnet AV-1 ein Signal, welches die von dem die erste Achse überwachenden Sensor ermittelte Achsgeschwindigkeit repräsentiert, AV-2 beschreibt die vom zweiten Sensor gemessene Achsgeschwindigkeit, usw. In diesem Beispiel ist vorgesehen, dass jede elektronische Steuereinrichtung 20 Sensorsignale von Sensoren empfängt, die auf demselben Wagen wie die Steuereinrichtung 20 angeordnet sind und/oder die Radachsen desselben Wagens überwachen. Die Sensorsignale können analoge oder digitale Signale sein, insbesondere digitale Signale mit mehreren Bit Datenbreite, welche die elektronische Steuereinrichtung 20 zu empfangen und/oder verarbeiten vermag. Die elektronische Steuereinrichtung 20 kann dazu ausgebildet sein, die Gültigkeit der Sensorsignale AV-V zu bewerten und/oder ein entsprechendes Gültigkeitssignal zu empfangen. Die Gültigkeit eines Signals kann beispielsweise durch eine Plausibilitätsbetrachtung des Signals oder einer Signaländerung bewertet werden. Es kann etwa vorgesehen sein, zu überprüfen, ob sich das Signal oder seine zeitliche Ableitung innerhalb oder außerhalb eines bestimmten vordefinierten Parameterbereichs befindet und/oder aus physikalischen Gründen ungültig ist. Es kann vorgesehen sein, dass eine elektronische Steuereinrichtung 20 jeweils dazu ausgebildet ist, eine entsprechende Gültigkeitsüberprüfung durchzuführen. Es ist auch vorstellbar, dass eine vorgeschaltete Steuereinrichtung oder ein Sensor dazu ausgebildet ist, eine solche Überprüfung durchzuführen und ein entsprechendes Gültigkeitssignal an die elektronische Steuereinrichtung 20 zu übermitteln. Der Steuereinrichtung 20 wird ferner ein Signal VR zugeführt, welches eine Referenzgeschwindigkeit angibt. Die Referenzgeschwindigkeit VR kann eine Fahrzeuggeschwindigkeit angeben, die von einer fahrzeugweiten, segmentweiten oder lokalen Einrichtung bereitgestellt sein kann. Die Referenzgeschwindigkeit VR kann beispielsweise von einem Fahrtrechner eines Zuges, einem Bremsrechner und/oder einer Gleitschutzeinrichtung bereitgestellt sein, insbesondere einem Gleitschutzrechner eines Wagens. Die Referenzgeschwindigkeit kann eine Fahrzeuggeschwindigkeit repräsentieren und aus Messergebnissen einer oder mehrerer Sensoreinrichtungen ermittelbar sein, etwa aus durch mehrere Gleitschutzsensoren bereitgestellte Drehzahlen der Radachsen eines oder mehrerer Wagen, insbesondere des Wagens, auf dem die jeweilige Steuereinrichtung 20 angeordnet ist, und/oder Radarmessungen und/oder anderen Sensoreinrichtungen zur Geschwindigkeitsermittlung. Ferner wird der elektronischen Steuereinrichtung 20 ein Signal VV zugeführt, welches die Gültigkeit des Referenzgeschwindigkeitssignals anzeigt. Die Steuereinrichtung 20 ist dazu ausgebildet, basierend auf jedem Achsgeschwindigkeitssignal AV-N ein Stillstandssignal BA-N zu erstellen oder zu berechnen. Ein Stillstandssignal BA-N kann dazu vorgesehen sein, anzuzeigen, ob das jeweilige Achsgeschwindigkeit AV-N auf einen Stillstand der zugehörigen Achse und/oder des Fahrzeugs schließen lässt. Ein Stillstandssignal BA-N kann insbesondere eine Datenbreite von einem Bit aufweisen. Die Steuereinrichtung 20 kann dazu ausgebildet sein, ein Sensorsignal AV-N mit einem Grenzwert zu vergleichen, welcher eine Grenzgeschwindigkeit repräsentieren kann. Liegt die durch ein Sensorsignal AV-N repräsentierte Geschwindigkeit unterhalb der Grenzgeschwindigkeit, die etwa 3 km/h-5 km/h betragen kann, kann die Steuereinrichtung 20 eine einen Stillstand anzeigende Stillstandsinformation erzeugen, in diesem Beispiel in Form eines Achsstillstandssignals BA-N. Liegt die durch ein Sensorsignal AV-N repräsentierte Geschwindigkeit oberhalb der Grenzgeschwindigkeit, kann die Steuereinrichtung 20 eine Stillstandsinformation in Form eines Achsstillstandssignal BA-N bereitstellen, welches anzeigt, dass die betreffende Achse nicht auf einen vorliegenden Stillstand schließen lässt. Ferner ist die Steuereinrichtung 20 dazu ausgebildet, zu jedem Achsstillstandssignal BA-N ein zugeordnetes Gültigkeitssignal GA-N bereitzustellen. Jedes der Gültigkeitssignale GA-N gibt an, ob das zugeordnete Achsstillstandsignal BA-N gültig ist und/oder auf einem gültigen Sensorsignal basiert. Jedes der Signale BA-N und GA-N hat eine Datenbreite von einem Bit. Die elektronische Steuereinrichtung 20 ist dazu ausgebildet, für jeden der Sensoren, die auf dem ihr zugeordneten Wagen angeordnet sind, entsprechende Signale BA-N und GA-N zu bilden. Ferner ist die elektronische Steuereinrichtung 20 dazu ausgebildet, die entsprechenden Signale BA-N und GA-N zu einer Stillstandssignalgruppe 21 zu gruppieren und diese als Wagenstillstandssignal SD-12 über den Datenbus 22 zu senden. Wenn wie im vorliegenden Fall jeder Wagen vier Achsgeschwindigkeitssensoren aufweist, für welche jeweils die Signale BA-N und GA-N erstellt und auf den Datenbus 22 gelegt werden, so hat das resultierende, von einer elektronischen Steuereinrichtung 20 auf den Datenbus gelegte Wagenstillstandssignal SD-12 jeweils insgesamt eine Datenbreite von 1 Byte. Auf jedem der gezeigten vier Wagen 12, 14, 16, 18 des Segmentes oder Fahrzeugs ist eine entsprechende Steuereinrichtung 20 vorgesehen, so dass in diesem Beispiel für die Stillstandsbestimmung insgesamt 4 Byte auf den Datenbus 22 gesendet werden, nämlich die Wagenstillstandssignale SD-14, SD-16 und SD-18. Jeder der Wagen hat ferner eine Stillstandsermittlungseinrichtung 24, welche an den Datenbus 22 zum Empfang von Daten angeschlossen ist. Die Stillstandsermittlungseinrichtung 24 kann in Hardware und/oder Software ausgebildet sein, etwa als Programm und/oder Modul. Entsprechend können die in der Figur 1 gezeigten Verbindungen zur Datenübertragung in Hardware und/oder Software ausgebildet sein, etwa als Datenschnittstellen und/oder Programm- oder Speicherschnittstellen. Es ist beispielsweise vorstellbar, dass die Stillstandsermittlungseinrichtung 24 als separate Steuereinrichtung ausgebildet ist. Die Stillstandsermittlungseinrichtung 24 kann innerhalb oder als Teil der elektronischen Steuereinrichtung 20 implementiert sein. Die Stillstandermittlungseinrichtung 24 ist allgemein dazu ausgebildet, die von allen zum Segment gehörenden und/oder an dem Datenbus angeschlossenen Wagen stammenden Stillstandssignale SD-12, SD-14, SD-16, SD-18 zu empfangen. Es versteht sich, dass eine Stillstandermittlungseinrichtung 24 dazu ausgebildet sein kann, das lokale Stillstandssignal, etwa SD-12 für den Wagen 12, von der zugeordneten Steuereinrichtung 20 zu empfangen, anstatt es von dem Datenbus 22 auszulesen. Ferner empfängt die Stillstandsermittlungseinrichtung 24 die Signale VR und VV, die in diesem Beispiel von der elektronischen Steuereinrichtung 20 auf jedem Wagen an die zugehörige Stillstandsermittlungseinrichtung 24 übermittelt werden kann. Es ist auch vorstellbar, dass die Referenzsignale VR und VV unter Umgehung der elektronischen Steuereinrichtung 20 an die Stillstandsermittlungseinrichtung 24 übermittelbar sind. Allgemein können die Steuereinrichtung 20 und/oder die Stillstandsermittlungseinrichtung 24 als oder als Teil einer Bremssteuereinrichtung eines Wagens implementiert sein. Die Stillstandsermittlungseinrichtung 24 ist dazu ausgebildet, basierend auf den Stillstandssignalen SD-12, SD-14, SD-16 und SD-18 und der Referenzgeschwindigkeit VR zu ermitteln, ob ein Stillstand des Fahrzeugs vorliegt. Insgesamt liegen in dem gezeigten Beispiel jeder Stillstandsermittlungseinrichtung 24 dazu 16 Achsstillstandssignale BA-N und zugehörige Gültigkeitssignale GA-N vor, die in den Stillstandssignalen kodiert sind und jeweils eine Datenbreite von einem Bit aufweisen. Zur Bewertung, ob ein Stillstand des Fahrzeugs vorliegt, können als nicht gültig gekennzeichnete Stillstandssignale und/oder gegebenenfalls eine nicht gültige Referenzgeschwindigkeit ignoriert werden. Basierend auf der Anzahl an gültigen Stillstandssignalen wird ein Schwellenwert gebildet. Der Schwellenwert gibt in Abhängigkeit von der Anzahl gültiger Stillstandssignale an, ab welcher Anzahl von Achsstillstandssignalen, welche einen Stillstand angeben, ein Stillstand tatsächlich angenommen wird. Es kann vorgesehen sein, dass die Stillstandsermittlungseinrichtung 24 dazu ausgebildet ist, einen Stillstand nur dann zur erkennen, wenn die Referenzgeschwindigkeit unterhalb eines vorgegebenen Referenzgrenzwertes liegt, der beispielsweise zwischen 3 und 5 km/h liegen kann. Sollte die Anzahl der Achsstillstandssignale, welche angeben, dass ein Stillstand vorliegt, geringer sein als der definierte Schwellenwert, so kann davon ausgegangen werden, dass kein Stillstand vorliegt. Für diese Betrachtung ist es nicht notwendig, die Referenzgeschwindigkeit mit der Grenzgeschwindigkeit zu vergleichen. Insbesondere kann die Stillstandsermittlungseinrichtung 24 dazu ausgebildet sein, einen Zustand, in welchem auf einen Stillstand erkannt wird, wieder aufzuheben, wenn die Anzahl der Achsstillstandssignale unter den Schwellenwert fällt. Es versteht sich, dass die Steueranordnung 10 dazu ausgebildet sein kann, eine kontinuierliche Überwachung der Fahrzeuggeschwindigkeit vorzunehmen und insbesondere dazu ausgebildet sein kann, die Stillstandssignale SD-12 bis SD-18 regelmäßig zu erzeugen und zu überprüfen, ob ein Stillstand vorliegt. Die Stillstandsermittlungseinrichtung kann dazu ausgebildet sein, ein Ergebnissignal SI und ein Ergebnisgültigkeitssignal SV bereitzustellen, welche angeben, ob ein Stillstand vorliegt und ob das Stillstandssignal gültig ist. Diese Signale können auf den Bus gegeben werden. Es ist auch vorstellbar, dass das Ergebnissignal lokal auf Wagenebene verwendet wird. Beispielsweise kann das Ergebnissignal zur Ansteuerung einer Türfreigabe oder Türöffnungsfunktion und/oder für eine Fehlerdiagnose verwendet werden. Es kann auch vorgesehen sein, dass verschiedene Fahrzeugeinrichtungen oder Wageneinrichtungen, die bei Stillstand des Fahrzeugs oder bei einer Fahrt des Fahrzeugs aktiviert werden, basierend auf dem Ergebnissignal aktiviert oder deaktiviert werden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

## Patentansprüche

1. Steueranordnung (10; 20, 24) für ein Schienenfahrzeug, mit
- mindestens einer Steuereinrichtung (20), welche zum Empfang von Sensorsignalen (AV-1; AV-2; AV-3; AV-4) angeschlossen oder anschließbar ist, wobei die Sensorsignale (AV-1; AV-2; AV-3; AV-4) jeweils mindestens eine Geschwindigkeit repräsentieren;
- mindestens einem Busanschluss, über welchen die Steuereinrichtung (20) zum Datenaustausch an einen Datenbus (22) des Schienenfahrzeugs angeschlossen oder anschließbar ist;
- wobei die Steuereinrichtung (20) dazu ausgebildet ist, basierend auf den Sensorsignalen (AV-1; AV-2; AV-3; AV-4) ein Stillstandssignal (SD-12) zu erstellen und auf den Datenbus (22) zu übertragen;
- einer Stillstandsermittlungseinrichtung (24), welche es vermag, über den Datenbus (22) Stillstandssignale (SD-12, SD-14. SD-16. SD-18) zu empfangen;
- wobei die Stillstandsermittlungseinrichtung (24) dazu ausgebildet ist, basierend auf über den Datenbus (22) empfangenen Stillstandssignalen (SD-12. SD-14, SD-16. SD-18) zu bestimmen, ob das Schienenfahrzeug sich im Stillstand befindet.

2. Steueranordnung nach Anspruch 1, wobei die Steuereinrichtung (20) dazu ausgebildet ist, Sensorsignale (AV-1; AV-2; AV-3; AV-4) von mehreren Sensoren zu empfangen und ein Stillstandssignal (SD-12, SD-14, SD-16, SD-18) zu erstellen, welches für mehrere durch die Sensorsignale (AV-1; AV-2; AV-3; AV-4) repräsentierte Geschwindigkeiten jeweils mindestens eine Stillstandsinformation (BA-1, BA-2, BA-3, BA-4) enthält.

3. Steueranordnung nach Anspruch 1 oder 2, wobei die Steuereinrichtung (20) dazu ausgebildet ist, eine Gültigkeit für jedes empfangene Sensorsignal (AV-1; AV-2; AV-3; AV-4) zu überprüfen.

4. Steueranordnung nach einem der vorhergehenden Ansprüche wobei die Steuereinrichtung (20) dazu ausgebildet ist, ein Stillstandssignal (SD-12, SD-14, SD-16. SD-18) zu erzeugen, welches für jede Stillstandsinformation deren Gültigkeit anzeigt.

5. Steueranordnung nach einem der vorhergehenden Ansprüche, wobei die Stillstandsermittlungseinrichtung (24) dazu ausgebildet ist, ein Referenzgeschwindigkeitssignal (VR) zu empfangen.

6. Steueranordnung nach Anspruch 5, wobei Stillstandsermittlungseinrichtung (24) dazu ausgebildet ist, basierend auf dem Referenzgeschwindigkeitssignal (VR) zu bestimmen, ob das Schienenfahrzeug sich im Stillstand befindet.

7. Steueranordnung nach einem der vorhergehenden Ansprüche, wobei die Steueranordnung (10) dazu ausgebildet ist, wagenweise das Vorliegen eines Stillstands des Fahrzeugs zu bestimmen, wenn das Schienenfahrzeug mehrere Wagen umfasst.

8. Schienenfahrzeug mit einer Steueranordnung nach einem der vorhergehenden Ansprüche.

9. Schienenfahrzeug nach Anspruch 8, wobei das Schienenfahrzeug mehrere Wagen mit jeweils einer elektronischen Steuereinrichtung (20) aufweist, welche über einen Datenbus (22) miteinander verbunden oder verbindbar sind.

10. Verfahren zum Bestimmen, ob sich ein Schienenfahrzeug im Stillstand befindet, insbesondere ein Schienenfahrzeug nach Anspruch 8 oder 9, mit den Schritten:
- Erstellen, durch mindestens eine elektronische Steuereinrichtung (20), jeweils eines Stillstandssignals (SD-12, SD-14, SD-16, SD18) basierend auf Sensorsignalen (AV-1; AV-2; AV-3; AV-4), welche jeweils mindestens eine Geschwindigkeit repräsentieren;
- Übertragen, durch die mindestens eine elektronische Steuereinrichtung (20) des jeweiligen Stillstandssignals (SD-12, SD-14, SD-16, SD18) auf einen Datenbus (22);
- Bestimmen, durch eine Stillstandsermittlungseinrichtung (24), ob ein Fahrzeugstillstand vorliegt basierend auf über den Datenbus (22) empfangenen Stillstandssignalen (SD-12. SD-14, SD-16. SD-18).

## Claims

1. Control assembly (10; 20, 24) for a rail vehicle, with
- at least one control device (20), which is connected or can be connected for receiving sensor signals (AV-1; AV-2; AV-3; AV-4), wherein the sensor signals (AV-1; AV-2; AV-3; AV-4) each represent at least one speed;
- at least one bus connector, by means of which the control device (20) is connected or can be connected for data exchange to a data bus (22) of the rail vehicle;
- wherein the control device (20) is designed to produce a standstill signal (SD-12) based on the sensor signals (AV-1; AV-2; AV-3; AV-4) and to transfer it to the data bus (22);
- a standstill determination device (24) that can receive standstill signals (SD-12, SD-14, SD-16, SD-18) by means of the data bus (22);
- wherein the standstill determination device (24) is designed to determine whether the rail vehicle is at a standstill based on standstill signals (SD-12, SD-14, SD-16, SD-18) received by means of the data bus (22).

2. Control assembly according to claim 1, wherein the control device (20) is designed to receive sensor signals (AV-1; AV-2; AV-3; AV-4) from a plurality of sensors and to produce a standstill signal (SD-12, SD-14, SD-16, SD-18) that contains at least one item of standstill information (BA-1, BA- 2, BA-3, BA-4) for each of a plurality of speeds represented by the sensor signals (AV-1; AV-2; AV-3; AV-4).

3. Control assembly according to claim 1 or 2, wherein the control device (20) is designed to check a validity for each received sensor signal (AV-1; AV- 2; AV-3; AV-4).

4. Control assembly according to any of the preceding claims, wherein the control device (20) is designed to produce a standstill signal (SD-12, SD-14, SD-16, SD-18) that indicates its validity for each item of standstill information.

5. Control assembly according to any of the preceding claims, wherein the standstill determination device (24) is designed to receive a reference speed signal (VR).

6. Control assembly according to claim 5, wherein the standstill determination device (24) is designed to determine whether the rail vehicle is at a standstill based on the reference speed signal (VR).

7. Control assembly according to any of the preceding claims, wherein the control assembly (10) is designed to determine the existence of a standstill of the vehicle at the carriage level if the rail vehicle comprises several carriages.

8. Rail vehicle with a control assembly according to any of the preceding claims.

9. Rail vehicle according to claim 8, wherein the rail vehicle comprises a plurality of carriages, each with an electronic control device (20), which are or can be connected to one another by means of a data bus (22).

10. Method for determining whether a rail vehicle is at a standstill, in particular a rail vehicle according to claim 8 or 9, with the steps of:
- producing a standstill signal (SD-12, SD-14, SD-16, SD18) by at least one electronic control device (20) in each case based on sensor signals (AV-1; AV-2; AV-3; AV-4), each of which represents at least one speed;
- transferring the respective standstill signal (SD-12, SD-14, SD-16, SD18) to a data bus (22) by means of the at least one electronic control device (20);
- determining by means of a standstill determination device (24) whether a vehicle standstill state exists based on standstill signals (SD-12, SD-14, SD-16, SD-18) received by means of the data bus (22).

## Revendications

1. Système (10; 20, 24) de commande d'un véhicule ferroviaire, comprenant :
- au moins un dispositif (20) de commande, qui est raccordé pour la réception de signaux (AV-1; AV-2; AV-3; AV-4) de capteur ou qui peut l'être, les signaux (AV-1; AV-2; AV-3; AV-4) de capteur représentant chacun au moins une vitesse ;
- au moins une borne de bus, par laquelle le dispositif (20) de commande est raccordé, pour l'échange de données, à un bus (22) de données du véhicule ferroviaire ou peut l'être ;
- dans lequel le dispositif (20) de commande est constitué pour, sur la base des signaux (AV-1; AV-2; AV-3; AV-4) de capteur, établir un signal (SD-12) d'arrêt et le transmettre au bus (22) de données ;
- un dispositif (24) de détermination d'arrêt, qui permet de recevoir, par le bus (22) de données, des signaux (SD-12, SD-14, SD-16, SD-18) d'arrêt ;
- dans lequel le dispositif (24) de détermination d'arrêt est constitué pour, sur la base de signaux (SD-12, SD-14, SD-16, SD-18) d'arrêt reçus par le bus (22) de données, déterminer si le véhicule ferroviaire se trouve à l'arrêt.

2. Système de commande suivant la revendication 1, dans lequel le dispositif (20) de commande est constitué pour recevoir des signaux (AV-1; AV-2; AV-3; AV-4) de capteur de plusieurs capteurs et pour établir un signal (SD-12, SD-14, SD-16, SD-18) d'arrêt, qui contient, pour plusieurs vitesses représentés par les signaux (AV-1; AV-2; AV-3; AV-4) de capteur respectivement, au moins une information (BA-1, BA-2, BA-3, BA-4) d'arrêt.

3. Système de commande suivant la revendication 1 ou 2, dans lequel le dispositif (20) de commande est constitué pour contrôler une validité de chaque signal (AV-1; AV-2; AV-3; AV-4) de capteur reçu.

4. Système de commande suivant l'une des revendications précédentes, dans lequel le dispositif (20) de commande est constitué pour produire un signal (SD-12, SD-14, SD-16, SD-18) d'arrêt, qui indique, pour chaque information d'arrêt, sa validité.

5. Système de commande suivant l'une des revendications précédentes, dans lequel le dispositif (24) de détermination d'arrêt est constitué pour recevoir un signal (VR) de vitesse de référence.

6. Système de commande suivant la revendication 5, dans lequel le dispositif (24) de détermination d'arrêt est constitué pour, sur la base du signal (VR) de vitesse de référence, déterminer si le véhicule ferroviaire se trouve à l'arrêt.

7. Système de commande suivant l'une des revendications précédentes, dans lequel le système (10) de commande est constitué pour déterminer, voiture par voiture, la présence d'un arrêt du véhicule, si le véhicule comprend plusieurs voitures.

8. Véhicule ferroviaire ayant un système de commande suivant l'une des revendications précédentes.

9. Véhicule ferroviaire suivant la revendication 8, dans lequel le véhicule ferroviaire a plusieurs voitures ayant chacune un dispositif (20) électronique de commande, qui sont reliés entre eux par un bus (22) de données ou qui peuvent l'être.

10. Procédé de détermination si un véhicule ferroviaire se trouve à l'arrêt, notamment un véhicule ferroviaire suivant la revendication 8 ou 9, comprenant les stades :
- établissement, par au moins un dispositif (20) électronique de commande, respectivement d'un signal (SD-12, SD-14, SD-16, SD-18) d'arrêt reposant sur des signaux (AV-1; AV-2; AV-3; AV-4) de capteur, qui représentent chacun au moins une vitesse ;
- transmission, par le au moins un dispositif (20) électronique de commande, du signal (SD-12, SD-14, SD-16, SD-18) d'arrêt respectif à un bus (22) de données ;
- détermination, par un dispositif (24) de détermination d'arrêt, du point de savoir s'il y a un arrêt du véhicule sur la base de signaux (SD-12, SD-14, SD-16, SD-18) d'arrêt reçus par l'intermédiaire du bus (22) de données.
